# EUROPEAN PATENT APPLICATION

(11) **EP 3 680 767 A1**
(43) Date of publication of application: **15.07.2020**
(21) Application number: 20151627.5
(22) Date of filing: 14.01.2020
(51) Int. Cl.: G06F 3/0488

(54) **ELECTRONIC DEVICE AND OPERATION METHOD THEREOF**

(30) Priority: 14.01.2019 KR 20190004636
(71) Applicant: Samsung Electronics Co., Ltd., Gyeonggi-do 16677 (KR)
(72) Inventor: Yuk, Hyunsoo, 16677 Suwon-si, Gyeonggi-do (KR); Shin, Soyoung, 16677 Suwon-si, Gyeonggi-do (KR); Jung, Soyoung, 16677 Suwon-si, Gyeonggi-do (KR); Han, Sangjin, 16677 Suwon-si, Gyeonggi-do (KR)
(74) Representative: Gulde & Partner

(57) **Abstract**

An electronic device having an electronic blackboard function, and an operation method thereof are provided. The electronic device includes a display, a touch input module comprising touch input circuitry configured to receive a touch input, a memory storing one or more instructions, and a processor configured to execute the one or more instructions stored in the memory to control the electronic device to: receive a writing area designation input designating a writing area through the touch input module, receive a tag input for the writing area through the touch input module, and perform a predefined function corresponding to the tag input for the writing area.

## Description

### CROSS-REFERENCE TO RELATED APPLICATION

This application is based on and claims priority under 35 U.S.C. §119 to Korean Patent Application No. 10-2019-0004636, filed on January 14, 2019, in the Korean Intellectual Property Office, the disclosure of which is incorporated by reference herein in its entirety.

### BACKGROUND

### 1. Field

The disclosure relates to an electronic device and operation method thereof, and for example, to an electronic device having a blackboard function and operation method thereof.

### 2. Description of Related Art

With the advancement of electronic technologies, various types of electronic products are being developed and released. Many different display devices such as televisions (TVs), mobile phones, personal computers (PCs), laptops, personal digital assistants (PDAs), etc., are widely used in most homes.

Electronic blackboard devices having a writing input function in addition to a content display function, which usual display devices have, are commonly used as well.

The electronic blackboard device may be more effectively used when the user inputs written content to the electronic blackboard device and applies various functions, such as text conversion, image capturing, storing, or the like, to the input written content. Accordingly, a method is required for the user to conveniently apply such various functions for the input written content to the electronic blackboard device.

### SUMMARY

Embodiments of the disclosure provide an electronic device and operation method thereof, which enable tag functions to be used more conveniently for written content input to the electronic device having an electronic blackboard function.

Additional aspects will be set forth in part in the description which follows and, in part, will be apparent from the description.

According to an example embodiment of the disclosure, an electronic device includes a display, a touch input module comprising touch input circuitry configured to receive a touch input, a memory storing one or more instructions, and a processor configured to execute the one or more instructions stored in the memory to control the electronic device to: receive a writing area designation input designating a writing area through the touch input module, receive a tag input for the writing area through the touch input module, and perform a predefined function corresponding to the tag input for the writing area.

In an example embodiment of the disclosure, the processor may execute one or more instructions to further control the electronic device to a receive tag area designation input designating the tag input through the touch input module and detect the tag input based on the tag area designation input.

In an example embodiment of the disclosure, the writing area designation input may include a first closed figure input, and the tag area designation input may include a second closed figure input different from the first closed figure input.

In an example embodiment of the disclosure, the processor may execute the one or more instructions to control the electronic device to: obtain a table defining one or more tags and functions corresponding to the respective one or more tags, and obtain information about a function defined for a tag corresponding to the tag input based on the table.

In an example embodiment of the disclosure, the processor may execute the one or more instructions to control the electronic device to: store metadata including an identifier of a tag corresponding to the received tag input and color information used in the tag input in storage space (e.g., a memory) as tag information.

In an example embodiment of the disclosure, the processor may execute the one or more instructions to control the electronic device to: search for the tag information stored in the storage space based on at least one of the tag identifier or the tag color information.

In an example embodiment of the disclosure, the processor may execute the one or more instructions to control the electronic device to: detect a text tag from the tag input, recognize a written character from the writing area, and convert the recognized character into digital text based on a defined function corresponding to the text tag.

In an example embodiment of the disclosure, the processor may execute the one or more instructions to control the electronic device to: create metadata that includes an identifier of the text tag, digital text corresponding to the recognized character, and color information used in the tag input.

In an example embodiment of the disclosure, the processor may execute the one or more instructions to control the electronic device to: detect a capture tag from the tag input, and capture a written content obtained from the writing area and store the content as an image based on a defined function corresponding to the capture tag.

In an example embodiment of the disclosure, the processor may execute the one or more instructions to control the electronic device to: detect a secret tag from the tag input, and conceal a written content obtained from the writing area with an image in a color used in the tag input based on a defined function corresponding to the secret tag.

In an example embodiment of the disclosure, the processor may execute the one or more instructions to control the electronic device to: output a user interface configured to receive personal identification information based on the detection of the secret tag, conceal the written content and output an image indicating that the secret tag is applied based on a user input including the personal identification information being received, output a user interface for receiving the personal identification information to release the secret tag based on a user input selecting the image being received, and disclose the concealed written content based on a user input including the personal identification information being received.

In an example embodiment of the disclosure, the processor may execute the one or more instructions to control the electronic device to: detect a content storing tag from the tag input, and store a written content obtained from the writing area in a virtual space classified based on a color used in the tag input, based on a defined function corresponding to the content storing tag.

In an example embodiment of the disclosure, the processor may execute the one or more instructions to control the electronic device to: detect a fetch tag from the tag input, and fetch and display the written content stored in the virtual space based on color information used in the tag input based on a defined function corresponding to the fetch tag.

In an example embodiment of the disclosure, the processor may execute the one or more instructions to control the electronic device to: display one or more contents of writing stored in a virtual space corresponding to the color information of a pen used in the tag input as respective thumbnail images based on the fetch tag being detected, and fetch and display a written content corresponding to a thumbnail image selected by an input received from among the one or more thumbnail images from the virtual space.

In an example embodiment of the disclosure, the processor may execute the one or more instructions to control the electronic device to: detect an all-tag display tag from the tag input, and output one or more tag images applicable to the written content obtained from the writing area based on a defined function corresponding to the all-tag display tag.

According to an example embodiment of the disclosure, an operation method of an electronic device includes: receiving a writing area designation input designating a writing area through a touch input module of the electronic device; receiving a tag input for the writing area through the touch input module; and performing a predefined function corresponding to the tag input for the writing area

According to an example embodiment of the disclosure, a computer program product comprising a non-transitory computer-readable recording medium having a program stored therein to perform an operation method of an electronic device is provided, the operation method including: receiving a writing area designation input designating a writing area through a touch input module of the electronic device; receiving a tag input for the writing area through the touch input module; and performing a predefined function corresponding to the tag input for the writing area.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 is a diagram illustrating an example electronic device having an electronic blackboard function, according to an embodiment of the disclosure;
FIG. 2 is a block diagram illustrating an example electronic device, according to an embodiment of the disclosure;
FIG. 3 is a block diagram illustrating an example electronic device, according to another embodiment of the disclosure;
FIG. 4A is a flowchart illustrating an example operation of an electronic device, according to an embodiment of the disclosure;
FIG. 4B is a diagram illustrating an example of a written input on a display of an electronic device, according to an embodiment of the disclosure;
FIG. 5A is a flowchart illustrating an example operation an electronic device, according to an embodiment of the disclosure;
FIG. 5B is a diagram illustrating an example of a written input on a display of an electronic device, according to an embodiment of the disclosure;
FIG. 6 is a diagram illustrating another example of a written input on a display of an electronic device, according to an embodiment of the disclosure;
FIG. 7 is a diagram illustrating an example of a pen-based input using colors in an electronic device, according to an embodiment of the disclosure;
FIG. 8 is a diagram illustrating example tags provided in an electronic device, according to an embodiment of the disclosure;
FIG. 9 is a diagram illustrating an example concept of a roll used in an electronic device, according to an embodiment of the disclosure;
FIG. 10 is a diagram illustrating an example of storing tag information, according to an embodiment of the disclosure;
FIG. 11 is a diagram illustrating an example function of an all-tag display tag, according to an embodiment of the disclosure;
FIG. 12 is a diagram illustrating an example function of a text tag, according to an embodiment of the disclosure;
FIG. 13 is a diagram illustrating an example of using color information in a text tag, according to an embodiment of the disclosure;
FIG. 14 is a diagram illustrating an example function of a capture tag, according to an embodiment of the disclosure;
FIG. 15 is a diagram illustrating an example function of a secret tag, according to an embodiment of the disclosure;
FIG. 16 is a diagram illustrating an example of how to release a secret tag, according to an embodiment of the disclosure;
FIG. 17 is a diagram illustrating an example function of a content storing tag, according to an embodiment of the disclosure;
FIG. 18 is a diagram illustrating examples of written content stored in virtual space based on a content storing tag, according to an embodiment of the disclosure;
FIG. 19 is a diagram illustrating an example function of a fetch tag, according to an embodiment of the disclosure;
FIG. 20 is a diagram illustrating an example of menus provided in an electronic device, according to an embodiment of the disclosure;
FIG. 21 is a diagram illustrating an example of using a roll explorer based on tag information, according to an embodiment of the disclosure; and
FIG. 22 is a diagram illustrating an example of a tag search in an exported PDF document, according to an embodiment of the disclosure.

### DETAILED DESCRIPTION

Terms as used herein will be described before the detailed description of embodiments of the disclosure.

The terms are selected as common terms widely used now, taking into account principles of the disclosure, which may however depend on intentions of those of ordinary skill in the art, judicial precedents, emergence of new technologies, and the like. Some terms as herein used may be arbitrarily selected, in which case, description thereof will be explained in detail in the disclosure. Therefore, the terms should be defined based on their meanings and descriptions throughout the disclosure.

Throughout the disclosure, the expression "at least one of a, b or c" indicates only a, only b, only c, both a and b, both a and c, both b and c, all of a, b, and c, or variations thereof.

The term "include (or including)" or "comprise (or comprising)" is inclusive or open-ended and does not exclude additional, unrecited elements or method steps. "Unit", "module", "block", etc., as used herein may each represent a unit for handling at least one function or operation, and may be implemented in hardware, software, or a combination thereof.

Embodiments of the disclosure will now be described in greater detail with reference to accompanying drawings. However, the various example embodiments of the disclosure may be implemented in many different forms, and are not limited thereto as will be discussed herein. In the drawings, parts unrelated to the description may be omitted for clarity, and like numerals refer to like elements throughout the disclosure.

The term 'user' as used herein may refer, for example, to a person who uses a control device to control functions or operations of an image display device, including, for example, and without limitation, a viewer, an administrator, or an installation engineer, etc.

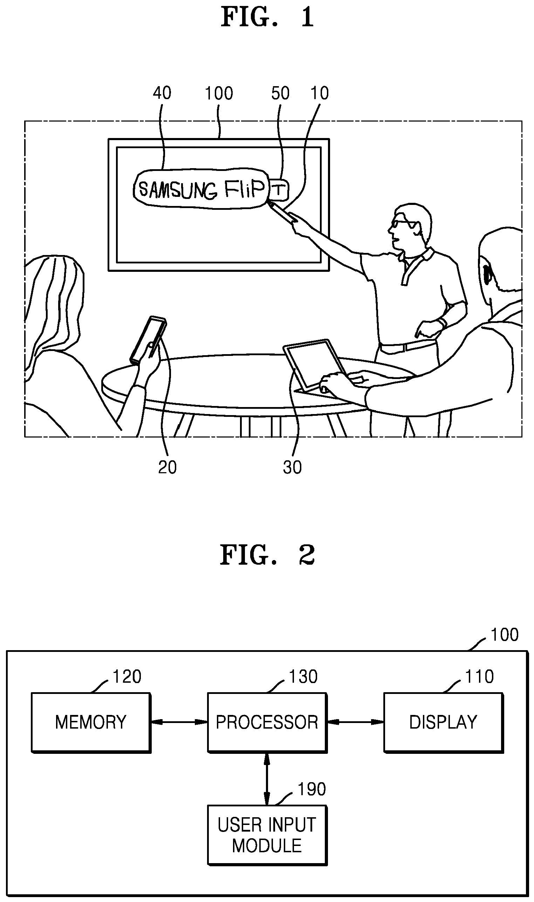

FIG. 1 is a diagram illustrating an example electronic device 100 having an electronic blackboard function, according to an embodiment of the disclosure.

Referring to FIG. 1, the electronic device 100 having the electronic blackboard function may perform various functions. For example, a user may make writing input to the electronic device 100 using his/her finger or a pen 10, or connect the electronic device 100 to an external device 20 or 30 for data transmission or reception with the external device 20 or 30 or for data mirroring with the external device 20 or 30.

Upon making the writing input to the electronic device 100 with his/her finger or the pen 10, the user may want to capture written content or convert the written content into text.

In an embodiment of the disclosure, the electronic device 100 provides a method of performing a predefined function based on the written content via the writing input made by the user without having to provide a menu prepared to perform a separate operation.

Referring to FIG. 1, for example, the user writes characters 'SAMSUNG FLIP' with his/her finger or the pen 10, and designates the written content to be subject to a function by drawing a closed figure 40 that encloses the characters 'SAMSUNG FLIP'. The closed figure 40 enclosing the characters 'SAMSUNG FLIP' may be called writing area designation input for settling (e.g., designating) the area of the written content 'SAMSUNG FLIP'. The user completes making writing input by settling (e.g., designating) a tag area by drawing another closed figure 50 next to the closed figure 40 and writing a predefined form of tag, e.g., 'T', in the tag area. The electronic device 100 may recognize the tag 'T' input by the user, and perform a function corresponding to the recognized tag for the characters 'SAMSUNG FLIP'.

The function corresponding to the tag may be variously determined. For example, when the written content is about character(s), a tag function, for example, may be converting the character(s) into digital text. In another example, when the written content is about character(s) or picture(s), a tag function, for example, may be capturing the character(s) or the picture(s). In another example, there may be a tag function for storing the written content in virtual space or fetching the written content from the virtual space. In another example, there may also be a tag function for concealing the written content. Furthermore, there may be a tag function for displaying all tags that may be provided to inform the user of types of tags. It will be understood that the foregoing examples are not limiting and that the disclosure is not limited thereto.

Although the tag has the form of 'T' in FIG. 1, the form of tags may be variously determined. The function to be applied for the tags may also be variously determined.

As described above, the electronic device 100 enables various functions to be performed for the written content by the user's writing input without causing the user to inconveniently manipulate menus.

As the writing input function does not require pen-based menus or buttons, the user may make writing input with his/her finger and perform a desired function for the written content.

Furthermore, information of the color used in tag input may enable more various tag functions to be implemented. For example, when the user inputs a tag using a red-colored pen, the written content may be stored in a storage space identified as red color. The user may search for the storage space identified as red color later on to look for the written content input with the red-colored pen.

As such, with writing input, many different functions may be performed for the written content, so that users using their electronic devices may efficiently manage the content written on the electronic device during a meeting or any event. For example, when the user writes an important note on his/her electronic device during a meeting, the user may store the written content by drawing a form of a tag that corresponds to a writing area storing function without trouble of manipulating any extra menus on the electronic device.

FIG. 2 is a block diagram illustrating an example electronic device, according to an embodiment of the disclosure.

Referring to FIG. 2, the electronic device 100 may include a display 110, a memory 120, a processor (e.g., including processing circuitry) 130, and a user input module (e.g., including user input circuitry) 190. The electronic device 100, however, may be implemented with more components than what is shown in FIG. 2, without being limited thereto.

Example components of the electronic device 100 will now be described in greater detail below with reference to FIG. 2.

The display 110 may output data processed by the electronic device 100.

The user input module 190 may include various user input circuitry and provide an interface for receiving user inputs, which may use a touch sensitive device to receive touch inputs. The user inputs may include the user's finger touch inputs, palm touch inputs, electronic pen inputs, etc.

When the display 110 is implemented by a touch screen, the display 110 may also be used as an input device in addition to the output device. For example, the display 110 may include, for example, and without limitation, at least one of a liquid crystal display (LCD), a thin film transistor-liquid crystal display (TFT-LCD), organic light-emitting diodes (OLEDs), a flexible display, a three dimensional (3D) display, an electrophoretic display, or the like.

The processor 130 may include various processing circuitry and controls general operation of the electronic device 100. For example, the processor 130 may execute one or more instructions stored in the memory 120 to control the display 110 and perform functions of the electronic device 100 as shown in FIGS. 1 to 20.

In an embodiment of the disclosure, the processor 130 may execute one or more instructions stored in the memory 120 to receive writing area designation input which designates a writing area through a touch input module, receive tag input for the writing area through the touch input module, and perform a predefined function corresponding to the tag input. As such, the electronic device may perform a certain function that the user wants for the written content through writing input from the user, so that the user may conveniently perform a tag function without manipulating any extra menu or button.

In an embodiment of the disclosure, the processor 130 may execute one or more instructions stored in the memory 120 to further receive tag area designation input which designates the tag input through the touch input module, and detect the tag input based on the tag area designation input. The writing area designation input includes first closed figure input, and the tag area designation input may include second closed figure input, which is different from the first closed figure input. To use the user's writing input as a tag function, a particular pattern of the user's writing input may be used as a tag format used for the tag function. For example, patterns of the writing input from the user for the processor 130 to recognize as a particular tag format may include the writing area designation input, the tag area designation input, and the tag input.

In an embodiment of the disclosure, the processor 130 may execute one or more instructions stored in the memory 120 to obtain a table that defines one or more tags and corresponding functions, and obtain information about a defined function corresponding to the detected tag input based on the table. The memory 120 may store the table that defines one or more tags and corresponding functions. When recognizing predefined tag input from the user' writing input, the processor 130 may look for a tag from the table stored in the memory 120 that corresponds to the tag input and identify a tag function corresponding to the tag input.

In an embodiment of the disclosure, the processor 130 may execute one or more instructions stored in the memory 120 to store metadata that includes an identifier of the detected tag and color information used in the tag pattern in the memory 120 as tag information. By storing information about a tag every time the tag is generated or executed, the electronic device 100 may allow the user later on to search for a description of the tag that the user used.

In an embodiment of the disclosure, the processor 130 may execute one or more instructions stored in the memory 120 to use at least one of the tag identifier or tag color information to search for tag information stored in the memory 120.

In an embodiment of the disclosure, the processor 130 may execute one or more instructions stored in the memory 120 to detect a text tag from the tag input, recognize written characters from the written content obtained from the writing area, convert the recognized characters into digital text according to a defined function corresponding to the text tag, and display the digital text. Furthermore, when performing the text tag function, the processor 130 may create metadata including an identifier of the text tag input, the digital text corresponding to the recognized characters, and color information used in the tag input.

In an embodiment of the disclosure, the processor 130 may execute one or more instructions stored in the memory 120 to detect a capture tag from the tag input, capture the written content obtained from the writing area according to a defined function corresponding to the capture tag input, and store the captured content as an image.

In an embodiment of the disclosure, the processor 130 may execute one or more instructions stored in the memory 120 to detect a secret tag from the tag input, and conceal the written content obtained from the writing area according to a defined function corresponding to the secret tag input with an image of a color used in the tag input. In this case, the processor 130 may further output an item for receiving user input of personal identification information after detection of the secret tag input, output an image indicating that the secret tag has been applied while concealing the written content when receiving the user input including the personal identification information, output an item for user input of personal identification information to release the secret tag when receiving user input that selects the image, and disclose the concealed written content when receiving the user input including the personal identification information.

In an embodiment of the disclosure, the processor 130 may execute one or more instructions stored in the memory 120 to detect a content storing tag from the tag input, and store the written content obtained from the writing area according to a defined function corresponding to the content storing tag input in a virtual space classified according to the color used in the tag input.

In an embodiment of the disclosure, the processor 130 may execute one or more instructions stored in the memory 120 to detect a fetch tag from the tag input, and fetch the written content stored in the virtual space according to a defined function corresponding to the fetch tag input using the color information used in the tag input.

In an embodiment of the disclosure, the processor 130 may execute one or more instructions stored in the memory 120 to display one or more contents of writing stored in the virtual space corresponding to the color information of the pen used in the writing input as respective thumbnail images when detecting the fetch tag input, and fetch and display a written content corresponding to a thumbnail image selected according to user input from among the one or more thumbnail images.

In an embodiment of the disclosure, the processor 130 may execute one or more instructions stored in the memory 120 to detect an all-tag display tag from the tag input, and output one or more tag images that may be applicable to the written content obtained from the writing area according to a defined function corresponding to the all-tag display tag input.

The memory 120 may store a program for processes and control of the processor 130, and store data input to or output from the electronic device 100.

The memory 120 may include, for example, and without limitation, at least one type of storage medium including a flash memory, a hard disk, a multimedia card micro type memory, a card type memory (e.g., SD or XD memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, or the like.

In an embodiment of the disclosure, the memory 120 may store a table that defines one or more tags and corresponding functions.

In an embodiment of the disclosure, the memory 120 may store one or more rolls, which are a kind of task file of the electronic device 100, and metadata corresponding to the respective rolls.

In an embodiment of the disclosure, the memory 120 may include virtual space classified by color according to the content storing tag.

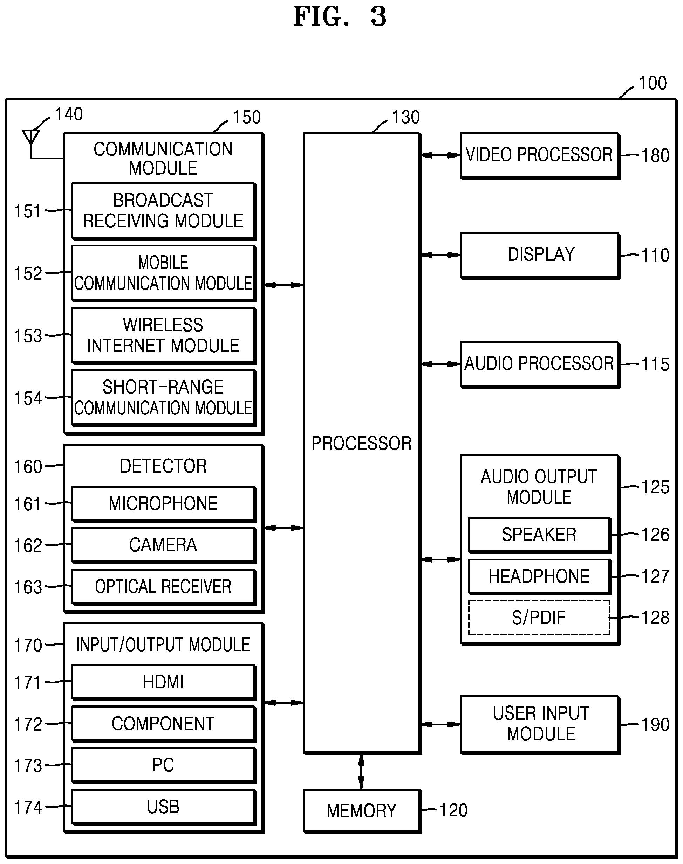

FIG. 3 is a block diagram illustrating an example electronic device, according to another embodiment of the disclosure.

Referring to FIG. 3, the electronic device 100 may further include a video processor (e.g., including video processing circuitry) 180, an audio processor (e.g., including audio processing circuitry) 115, an audio output module (e.g., including audio output circuitry) 125, a tuner 140, a communication module (e.g., including communication circuitry) 150, a detector (e.g., including detecting circuitry) 160, and an input/output module (e.g., including input/output circuitry) 170 in addition to the aforementioned display 110, memory 120, processor (e.g., including processing circuitry) 130, and user input module (e.g., including input circuitry) 190.

Descriptions of the display 110, memory 120, processor 130, and input module 190 overlapping with what are described above in connection with FIG. 2A will not be repeated below.

The tuner 140 may tune in with a frequency of a channel that the electronic device 100b intends to receive among a lot of radio frequencies through amplification, mixing, resonance of broadcast signals received via wires or wirelessly. The broadcast signal may include, for example, and without limitation, audio, video, and additional information, e.g., electronic program guide (EPG).

The communication module 150 may include various communication circuitry and connect the electronic device 100 to an external device, e.g., an audio device, a mobile device, or the like, under the control of the processor 130. The processor 130 may transmit or receive content to or from an external device connected through the communication module 150, download an application from the external device, or browse the web.

The communication module 150 may include one or more modules including various communication circuitry that allow wireless communication between the electronic device 100 and a wireless communication system or between the electronic device 100 and a network in which another electronic device is located. For example, the communication module 150 may include various modules, each including various communication circuitry, such as, for example, and without limitation, a broadcast receiving module 151, a mobile communication module 152, a wireless Internet module 153, and a short-range communication module 154. The communication module 150 may also be referred to as a transceiver.

The broadcast receiving module 151 receives broadcast signals and/or broadcasting-related information from an external broadcasting management server on a broadcasting channel. The broadcast signals may include television broadcast signals, radio broadcast signals, data broadcast signals, and a combination thereof.

The mobile communication module 152 transmits and/or receives wireless signals to and from at least one of a base station, an external terminal, or a server in the mobile communication network. The wireless signal may include a voice call signal, a video call signal or different types of data involved in transmission/reception of a text/multimedia message.

The wireless Internet module 153 may refer, for example, to a module for wireless Internet access, which may be built inside or outside the device. The wireless Internet technology may employ wireless LAN (WLAN), Wi-Fi, wireless broadband (Wibro), world interoperability for microwave access (Wimax), high speed downlink packet access (HSDPA), etc. The device may make Wi-Fi connection to another device through the wireless Internet module 153. For example, the processor 130 may use the wireless Internet module 153 to communicate with one or more APs 300.

The short-range communication module 154 may refer, for example, to a module for short-range communication. For the short-range communication technology, Bluetooth, Radio Frequency Identification (RFID), infrared Data Association (IrDA), Ultra Wideband (UWB), ZigBee, etc. may be used.

The detector 160 may include various detecting circuitry and detect the user's voice, the user's image or the user's interaction, and may include various detecting circuitry including, for example, and without limitation, a microphone 161, a camera 162, and an optical receiver 163.

The microphone 161 may receive voice uttered by the user. The microphone 161 may convert the received voice into an electric signal and output the electric signal to the processor 130.

The camera 162 may receive an image, e.g., consecutive frames, corresponding to a motion of the user including a gesture in a camera recognition range.

The optical receiver 163 may receive an optical signal (including a control signal) from a remote control device. The optical receiver 163 may receive an optical signal corresponding to the user input, e.g., touch, pushing, a touching gesture, voice, or motion, of the user from the remote control device. A control signal may be derived from the received optical signal under the control of the processor 130.

The input/output module 170 may include various input/output circuitry and may receive a video (e.g., a moving image), an audio (e.g., a voice, music, etc.), additional information (e.g., an EPG), or the like from outside of the electronic device 100 under the control of the processor 130. The input/output module 170 may include various input/output circuitry including, for example, and without limitation, one or a combination of a high-definition multimedia interface (HDMI) port 171, a component jack 172, a personal computer (PC) port 173, and a universal serial bus (USB) port 174.

The video processor 180 may include various video processing circuitry and process image data to be displayed on the display 110, and perform various image processing operations such as decoding, rendering, scaling, noise filtering, frame rate conversion, resolution conversion, etc., on the video data.

The display 110 may display a video included in the broadcast signal received through the tuner 140 on the screen, under the control of the processor 130. Furthermore, the display 110 may display content, e.g., a moving image, received through the communication module 150 or the input/output module 170. The display 110 may output an image stored in the memory 120, under the control of the processor 130. In an embodiment of the disclosure, the display 110 may output a screen of an external device mirrored onto the electronic device 100, and may output drawing data corresponding to the received drawing input.

When the display 110 and a touch pad are implemented in a layered structure to constitute a touch screen, the display 110 may also be used as an input device in addition to the output device. The display 110 may include, for example, and without limitation, at least one of an LCD, a TFT-LCD, OLEDs, a flexible display, a 3D display, an electrophoretic display, or the like.

The audio processor 115 may include various audio processing circuitry and may process audio data. For example, the audio processor 115 may perform various processing such as decoding, amplification, noise filtering, etc., on the audio data.

The audio output module 125 may include various audio output circuitry and may output an audio included in the broadcast signal received through the tuner 140, an audio received through the communication module 150 or the input/output module 170, or an audio stored in the memory 120, under the control of the processor 130. The audio output module 125 may include various audio output circuitry, such as, for example, and without limitation, at least one of a speaker 126, a headphone output terminal 127 or s Sony/Philips digital interface (S/PDIF) 128.

The user input module 190 may include various user input circuitry that allows the user to input data to control the electronic device 100. The user input module 190 may include a touch input module to receive touch input. For example, the user input module 190 may include a key pad, a dome switch, a (capacitive, resistive, infrared detection type, surface acoustic wave type, integral strain gauge type, piezoelectric effect type) touch pad, a jog wheel, a jog switch, etc., without being limited thereto.

In an embodiment of the disclosure, the memory 120 may store a program for processes and control of the processor 130, and store data input to or output from the electronic device 100.

The processor 130 may include various processing circuitry and control general operation of the electronic device 100 and signal flows between the internal components of the electronic device 100, and process data. The processor 130 may run an operating system (OS) and various applications stored in the memory 120 at the user's request or when a predetermined condition is met.

In an embodiment of the disclosure, the processor 130 may execute one or more instructions stored in the memory 120 to receive writing input on the display 110, detect a writing area and a tag area from the writing input, detect a predefined form of tag input from the detected tag area, obtain a defined function corresponding to the detected tag input, obtain written content from the detected writing area, and perform the defined function corresponding to the detected tag input for the written content. As such, the electronic device may perform a certain function that the user wants for the written content through writing input from the user, so that the user may conveniently perform a tag function without manipulating any extra menu or button.

The block diagrams of the electronic device 100 as shown in FIGS. 2 and 3 are merely examples that are illustrated as an example embodiment of the disclosure. Components of the block diagram may be merged, added or omitted according to actual specifications of the electronic device 100. For example, two or more components may be merged into one, or a single component may be split into two or more components as needed. Functions performed in the blocks are shown for explaining the embodiment of the disclosure, and the disclosure is not limited to the detailed operation or components corresponding to the blocks.

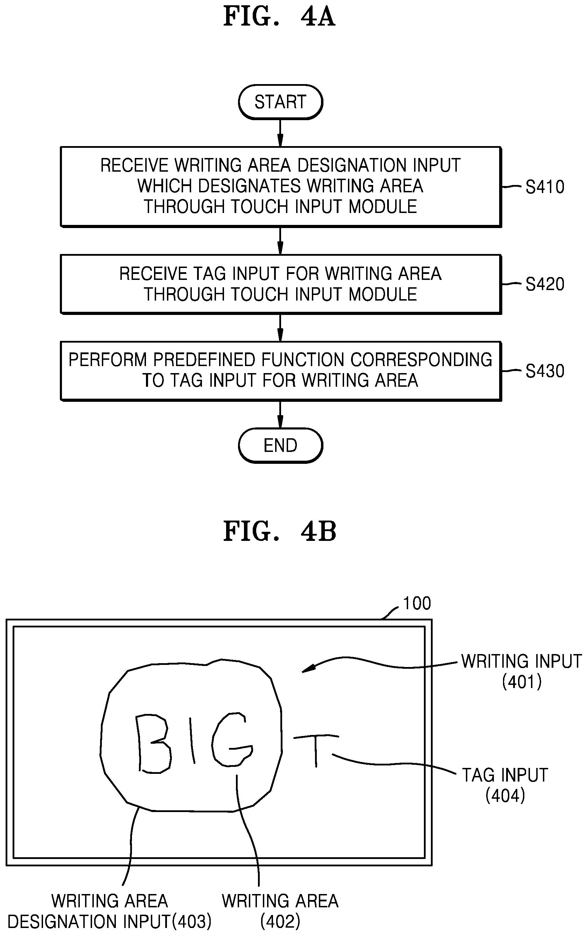

FIG. 4A is a flowchart illustrating an example operation of an electronic device, according to an embodiment of the disclosure.

Referring to FIG. 4A, in operation S410, the electronic device 100 receives writing area designation input which designates a writing area through a touch input module.

When the user makes writing input on his/her electronic device 100 e.g., during a meeting and wants to perform a particular function for the writing input, the user may make the writing area designation input to define a writing area to be subject to the particular function. The writing area designation input may also be a kind of writing input on the electronic device 100.

For example, the writing area designation input may correspond to a closed figure that encloses part or all of the written content input from the user on the electronic device 100. The user may determine a writing area of the written content to an extent which the user wants to perform the particular function and make the writing area designation input by drawing the closed figure that encloses the writing area.

In operation S420, the electronic device 100 receives tag input for the writing area through the touch input module.

The user may make the tag input for the writing area to be subject to a particular function. The tag input is also a kind of writing input.

The electronic device 100 may store information about one or more tags and functions defined to correspond to the tags. To use the stored tag functions in the electronic device 100, the user may make tag input corresponding to a tag function that the user wants.

As long as the tag input may be identified by the electronic device 100, the tag input may be made at any location on the display of the electronic device 100.

In operation S430, the electronic device 100 performs a predefined function that corresponds to the tag input for the writing area.

The electronic device 100 may receive the tag input in operation S420 and compare the form of the received tag input with one or more tags stored in the electronic device 100. When the received tag input is recognized as one of the predefined tags stored in the electronic device 100, the electronic device 100 may obtain a defined function corresponding to the recognized tag and perform the function.

FIG. 4B is a diagram illustrating an example of writing input on a display of an electronic device, according to an embodiment of the disclosure.

Referring to FIG. 4B, the electronic device 100 may receive writing input 401 on the display. The writing input 401 may refer, for example, to any writing input made on the display through a pen or the user's finger. Accordingly, the writing input 401 includes both writing input made by the user for actual content input using the electronic device 100 and writing input made by the user for tag execution. In FIG. 4B, writing input 401 on the display includes a writing area 402 of 'BIG', writing area designation input 403 that encloses the characters 'BIG', and tag input 404.

For example, when the electronic device 100 recognizes the tag input 404 from the writing input 401, it may determine to perform a tag function corresponding to the tag input 404 for the writing area 402 defined by the writing area designation input 403.

In the disclosure, to settle (e.g., designate) a range of the writing area 402 to be subject to the tag function, the writing area designation input 403 may be detected among the writing input 401. In a way to distinguish written content to be subject to the tag among the writing input 401, a closed figure to enclose the written content may be taken into account. The closed figure may have its starting point connected to its end point to enclose the writing area 402 regardless of shape.

The electronic device 100 may recognize a tag corresponding to the tag input 404 by comparing the tag input 404 received through the touch input module with the forms of tags stored in the electronic device 100. When the electronic device 100 recognizes the tag, it may apply a function corresponding to the tag to the writing area 402 to perform the tag function.

For example, the user may write 'BIG' on the display of the electronic device 100 while performing a task using the electronic device 100. And, when the user wants to apply a certain function to the written content 'BIG', the user may apply the tag function by drawing the writing area designation input 403 that encloses the writing 'BIG', and the tag input 404. Although the user usually uses the above method to use a tag function in the electronic device 100, the sequences in the method are not limited thereto.

According to various embodiments of the disclosure it does not matter in which order the user makes the writing input in on the display of the electronic device 100. As the electronic device 100 determines a target to be subject to the tag function by recognizing the writing area designation input 403 and the tag input 404, it does not matter whether the tag input 404 comes first or the writing area designation input 403 comes first.

Furthermore, the electronic device 100 may define color information in relation to a tag function. No matter which color the user uses for the content in the writing area 402, the electronic device 100 may define a color of the pen used in the writing area designation input 403 and the tag input 404 as a tag color. The electronic device 100 may add the tag color to the information about the tag and store the information. Accordingly, the electronic device 100 may search for tag information based on the tag color.

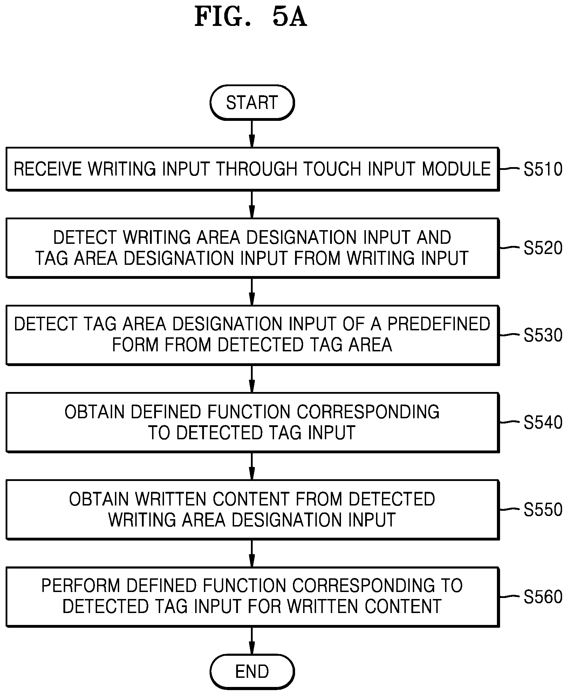

FIG. 5A is a flowchart illustrating an example operation of an electronic device, according to an embodiment of the disclosure.

Referring to FIG. 5A, in operation S510, the electronic device 100 receives writing input through a touch input module.

For example, the user may make writing input by writing characters or drawing a picture on the touch input module with his/her finger or an electronic pen, or by fetching an image.

In operation S520, the electronic device 100 detects the writing area designation input and tag area designation input from the writing input.

For example, the electronic device 100 may detect the writing area and the tag area by recognizing the writing area designation input and the tag area designation input from the received writing input. The writing area designation input may include a first pattern. The tag area designation input may include a second pattern. For example, the first pattern may include a first closed figure, and the second pattern may include a second closed figure different from the first closed figure. For example, the second closed figure may be located next to the first closed figure. The first and second closed figures refer to figures that form a closed loop with its starting point connected to its end point. In an embodiment of the disclosure, as a tag is executed not by a separate menu but based on writing input made by the user, the electronic device 100 is required to distinguish between the writing input as content and the writing input for tag execution. When recognizing a particular pattern while the user is making writing input, the electronic device 100 may determine the particular pattern as a pattern for tag execution.

Unlike in the example as shown in FIG. 4A where there is no tag area designation input but tag input, the electronic device 100 further detects the tag area designation input to settle the region where the tag input is located in the example of FIG. 5A. In other words, the electronic device 100 detects the tag area designation input first and then detects the tag input in the detected tag area designation input. Detecting the tag area designation input may facilitate distinguishing the tag input from the written content that the user inputs without regard to a particular tag function.

In operation S530, the electronic device 100 detects a predefined form of tag input from the detected tag area designation input.

For example, the electronic device 100 may store one or more predefined tags, and when determining that the tag input detected from the tag area designation input detected from the writing input is similar to a predefined form of tag stored in the electronic device 100 by more than certain threshold value by comparing the tag input with the one or more predefined tags, detect the tag input as the predefined form of tag.

In operation S540, the electronic device 100 obtains a defined function corresponding to the detected tag input.

For example, the electronic device 100 may store a table that defines one or more tags and corresponding functions. Accordingly, the electronic device 100 may obtain a defined function corresponding to the detected tag input from the table. The predefined tags may include, for example, and without limitation, a text tag, a capture tab, a secret tag, a content storing/fetch tag, an all-tag display tag, etc., which will be described in greater detail below.

In operation S550, the electronic device 100 obtains the written content from the detected writing area designation input.

The electronic device 100 may obtain the written content from the writing area designation input detected in operation S520. As described above, the writing area designation input may be settled e.g., by the first closed figure, and the written content includes what is enclosed by the first closed figure. The remaining writing input outside the first enclosed figure is not included in the written content.

In operation S560, the electronic device 100 performs a defined function corresponding to the detected tag input for the written content.

The electronic device 100 may perform the tag function obtained in operation S540 on the written content obtained in operation S550.

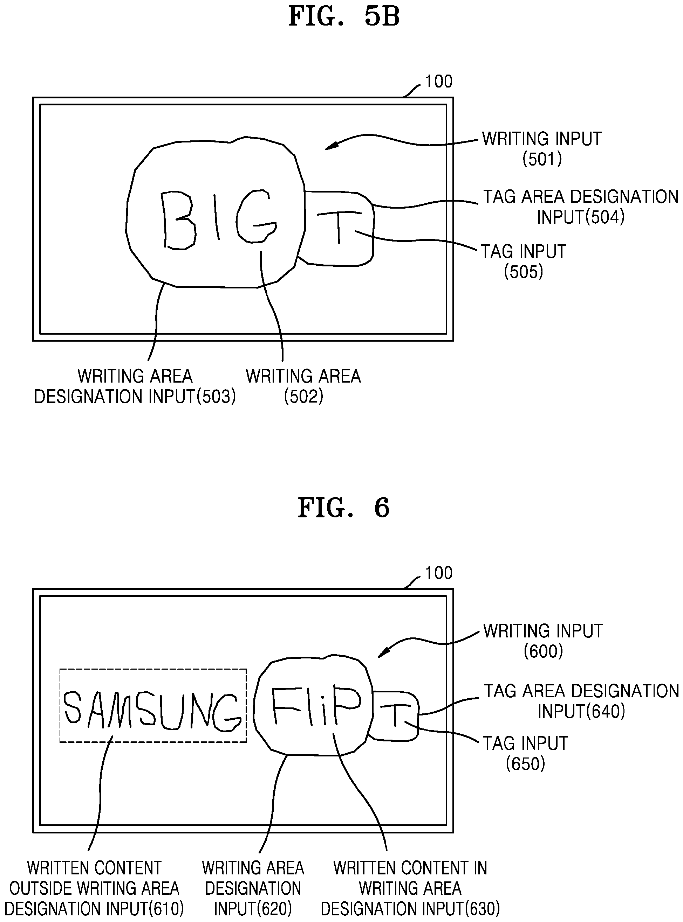

FIG. 5B is a diagram illustrating an example of writing input on a display of an electronic device, according to an embodiment of the disclosure.

Referring to FIG. 5B, the electronic device 100 may receive writing input 501 on the display. The writing input 401 may refer, for example, to any writing input made on the display through a pen or the user's finger. Accordingly, the writing input 501 includes both writing input made by the user for actual content input using the electronic device 100 and writing input made by the user for tag execution. In FIG. 5B, writing input 501 on the display includes the writing area 502 including characters 'BIG', writing area designation input 503 that encloses the characters 'BIG', tag area designation input 504, and tag input 505.

For example, when the electronic device 100 recognizes the writing area designation input 503, the tag area designation input 504, and the tag input 505 from the writing input 501, it may determine that the writing input 501 is related to a tag. Except the writing area 502, the writing area designation input 503, the tag area designation input 504, and the tag input 505, which are related to tag recognition, may be referred to as a tag format.

In an embodiment of the disclosure, the writing area designation input 503 may have the form of a first closed figure. To settle a range of the written content to be subject to a tag function, the written content needs to be distinguished first among the writing input. In a way to distinguish written content to be subject to the tag among the writing input 501, a closed figure to enclose the written content may be taken into account. The closed figure may have its starting point connected to its end point to enclose the written area 502 regardless of what shape it has.

In an embodiment of the disclosure, the tag area designation input 504 may have the form of a second closed figure. What is enclosed by the second closed figure may be referred to as the tag input. The first closed figure is used to settle the written content to which the tag function is to be applied, and the second closed figure is used to identify the tag input. In other words, the electronic device 100 may look for tag input to be recognized by the electronic device 100 from what is enclosed by the second closed figure. By recognizing the second closed figure next to the first closed figure, the electronic device 100 may determine that the second closed figure contains the tag input 505.

In an embodiment of the disclosure, the tag area designation input 504 may be arranged next to the writing area designation input 503. As shown in FIG. 5B, when the tag area designation input 504 is detected next to the writing area designation input 503, it may be recognized as the tag area designation input 504. It is not, however, limited thereto, and in another example, there may be the tag area designation input 504 detected not near but far from the writing area designation input 503. The electronic device 100 may recognize a tag corresponding to the tag input 505 by comparing the tag input 505 with the forms of tags stored in the electronic device 100. When the electronic device 100 recognizes the tag, it may apply a function corresponding to the tag to the writing area 502 to perform the tag function.

For example, the user may write 'BIG' on the display of the electronic device 100 while performing a task using the electronic device 100. And, when the user wants to apply a certain function to the written content 'BIG', the user may apply the tag function he/she wants by drawing the writing area designation input 503 (the first closed figure) that encloses the writing 'BIG', the tag area designation input 504 (the second closed figure) next to the writing area designation input 503, and the tag input 505 in an area enclosed by the tag area designation input 504. Although the user usually uses the above method to use a tag function in the electronic device 100, the sequences in the method are not limited thereto.

According to various embodiments of the disclosure it does not matter in which order the user makes the writing input in on the display of the electronic device 100. As the electronic device 100 determines a target to be subject to the tag function by recognizing the first closed figure, the second closed figure, and the tag inside the second closed figure, it does not matter whether the tag input 505 comes first or the written content comes first.

Furthermore, the electronic device 100 may define color information in relation to a tag function. No matter which color the user uses for the content of the writing input 501, the electronic device 100 may define a tag format, e.g., a color of the pen used in the writing area designation input 504, the tag area designation input 504, and the tag input 505 as a tag color. The electronic device 100 may add the tag color to the information about the tag and store the information. Accordingly, the electronic device 100 may search for tag information based on the tag color.

FIG. 6 is a diagram illustrating another example of a writing input on a display of an electronic device, according to an embodiment of the disclosure.

Referring to FIG. 6, the electronic device 100 may receive writing input 600 on the display. The writing input 600 may refer, for example, to any writing input made on the display through a pen or the user's finger. In FIG. 6, the writing input 600 on the display includes characters 'SAMSUNG FliP' 610 and 630, writing area designation input 620 having the form of a first closed figure that encloses 'FliP', tag area designation input 640 having the form of a second closed figure drawn next to the writing area designation input 620, and tag input 650 drawn in the second closed figure.

In FIG. 6, the user writes 'SAMSUNG FliP' 610 and 630 on the display of the electronic device 100, and draws the first closed figure 620 to enclose 'FliP' 630 while leaving 'SAMSUNG' 610 outside the first closed figure 620. In this case, the electronic device 100 settles 'FliP' 610 inside the first closed figure 620 as the written content to be subject to a tag function and excludes 'SAMSUNG' 630 outside the first closed figure 620 from the written content. For example, when a function corresponding to the tag input 650 is converting the written content into digital text, the electronic device 100 converts 'FliP' 630 inside the first closed figure 630 into digital text and does not perform digital text conversion on 'SAMSUNG' 610 outside the first closed figure 620.

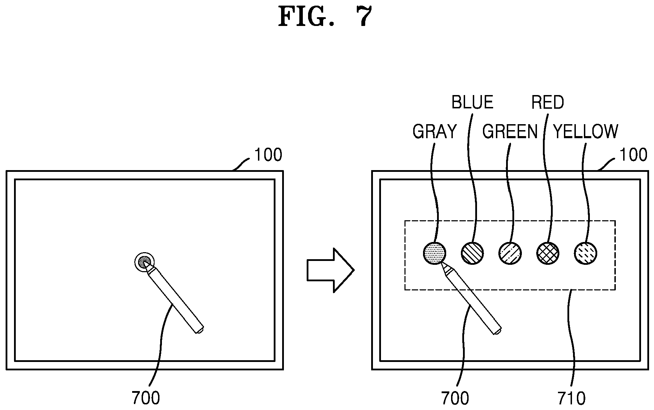

FIG. 7 is a diagram illustrating an example of pen-based input using colors in an electronic device, according to an embodiment of the disclosure.

The user may make writing input on the electronic device 100 using his/her finger. In this case, when the user wants to determine or change the color of the writing input, the user may determine a color to be used in writing input using a menu or button equipped in the electronic device 100.

The user may make writing input on the electronic device 100 using a pen. In this case, for example, the user may have a color menu 710 of a pen 700 to be displayed for use in writing input by pushing the pen 700 on the display of the electronic device 100 for a certain time. The user may determine a color of the pen 700 to be used in writing input by selecting the color on the color menu 710.

In an embodiment of the disclosure, the color information used in writing input may be used in the tag function.

In an embodiment of the disclosure, as for a text tag that converts the written content into digital text, the written content may be converted into digital text using the color information used in the written content.

In an embodiment of the disclosure, when a function corresponding to the tag input is performed for the written content, tag information is stored as the tag function is performed, and the tag information may include color information used in the written content. The color information included in the tag information may be used later to search for a tag executed in the electronic device 100. This will be described in greater detail below.

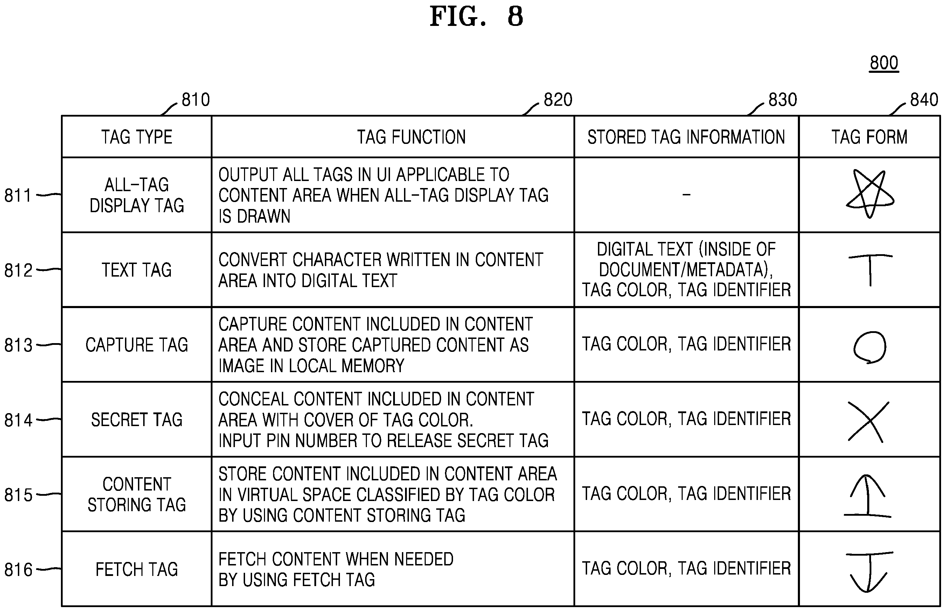

FIG. 8 is a diagram illustrating example tags provided in an electronic device, according to an embodiment of the disclosure.

Referring to FIG. 8, tag types 810 provided in the electronic device 100 may include, for example, and without limitation, all-tag display tag 811, a text tag 812, a capture tag 813, a secret tag 814, a content storing tag 815, and a fetch tag 816. Tag function 820 represents a function for each tag. Tag information 830 represents information stored for each tag. Tag form 840 represents a form used to identify each tag. The tag forms as shown in FIG. 8 are only examples, and there may be other various forms used for the tags, and the tag forms are not limited to those illustrated.

The all-tag display tag 811 is to output forms of all tags that may be designated in a writing area to a user interface. The all-tag display tag 811 is to display all possible forms of tags that that user may apply to the written content in the writing area to serve as such a function as 'help' for the user when the user has no idea of which tags he/she is able to use. For example, the tag form 840 of the all-tag display tag 811 may be, for example, a star.

The text tag 812 is to recognize characters of the written content in the writing area through e.g., object recognition, and convert them into digital text. The digital text may be stored in a document for which the text tag is performed. The digital text may also be included in text information. The tag information 830 stored for the text tag 812 may include the digital text resulting from the conversion, color information used in the tag input, and a tag identifier. The tag form 840 of the text tag 812 may be, for example, 'T'.

The capture tag 813 is to capture the written content in the writing area and store it as an image in a local drive in the electronic device 100. The written content in the writing area may include an image or characters. The tag information 830 stored for the capture tag 813 may include color information used in the writing input, and the tag identifier. The tag form 840 of the capture tag 813 may be, for example, 'O'.

The secret tag 814 is to conceal the written content in the writing area with a cover of a color used in the writing input. To release the secret tag and remove the cover, a personal identification number (PIN) number may be required. The tag information 830 stored for the secret tag 814 may include color information used in the writing input, and the tag identifier. The tag form 840 of the secret tag 814 may be, for example, 'X'.

The content storing tag 815 is to store the written content in the writing area in virtual space classified by color. The tag information 830 stored for the content storing tag 815 may include color information used in the writing input, and the tag identifier. The tag form 840 of the content storing tag 815 may be, for example, '↑'.

The fetch tag 816 is to fetch the written content stored in the virtual space classified by color. The tag information 830 stored for the fetch tag 816 may include color information used in the writing input, and the tag identifier. The tag form 840 of the fetch tag 816 may be, for example, '↑'.

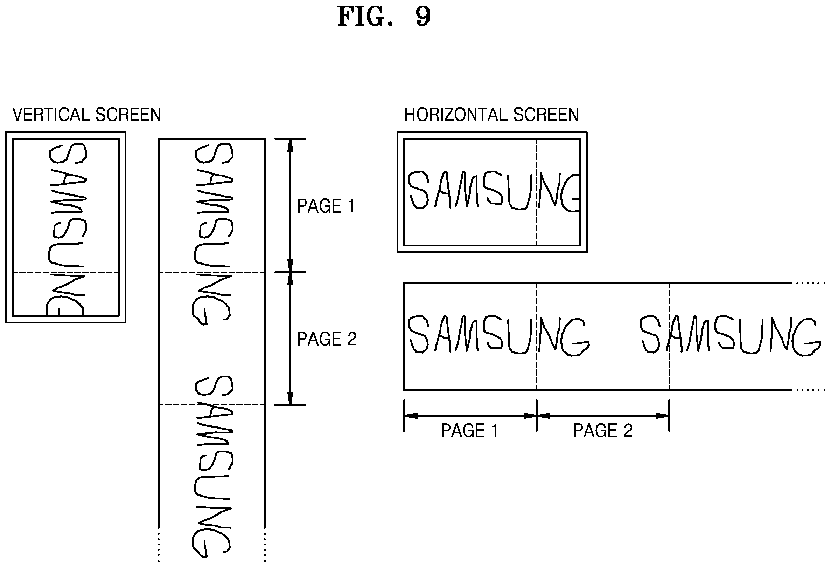

FIG. 9 is a diagram illustrating an example concept of a roll used in an electronic device, according to an embodiment of the disclosure.

In an embodiment of the disclosure, a file used in the electronic device 100 may be called a 'roll'. The roll may refer, for example, to a file with several successive pages. For example, one roll may have the form of 1 page or up to 20 successive pages.

Referring to FIG. 9, for example, pages may be connected vertically in a vertical mode and horizontally in a horizontal mode.

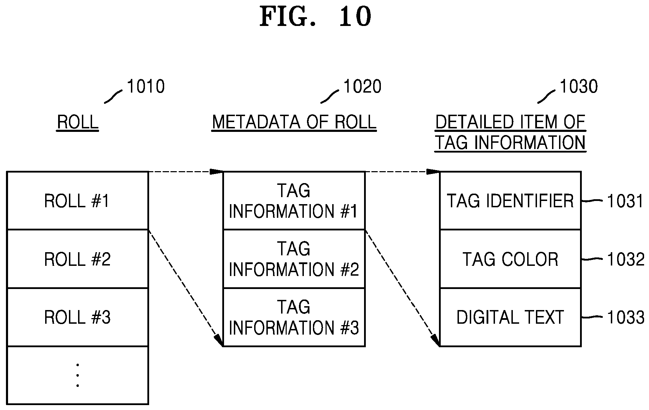

FIG. 10 is a diagram illustrating an example of storing tag information, according to an embodiment of the disclosure.

Referring to FIG. 10, every time the user creates a roll 1010 in the electronic device 100, the roll 1010 may be stored in a memory of the electronic device 100. For example, the roll 1010 stored in the electronic device 100 may include roll #1, roll #2, roll #3,..., roll #n.

Each roll has its metadata 1020, and the metadata 1020 may include one or more pieces of tag information. When the user opens and uses a roll, as many pieces of tag information as the number of tags used by the user are created and included in the metadata while the roll is used. For example, referring to FIG. 10, roll #1 may include tag information #1, tag information #2, and tag information #3.

Each tag information includes a detailed item 1030. For example, tag information #1 may include detailed items 1030, such as a tag identifier 1031 for identifying the tag #1, and a tag color 1032, which is a pen color used as the tag format in using the tag. Furthermore, tag information #1 may further include digital text 1033 as the detailed item 1030 when the tag corresponds to the text tag.

As shown in FIG. 10, by storing the roll and its metadata, tag information, in the electronic device 100, the user may conveniently search for a tag that the user previously used.

Functions of the tags as shown in FIG. 8 will now be described in detail.

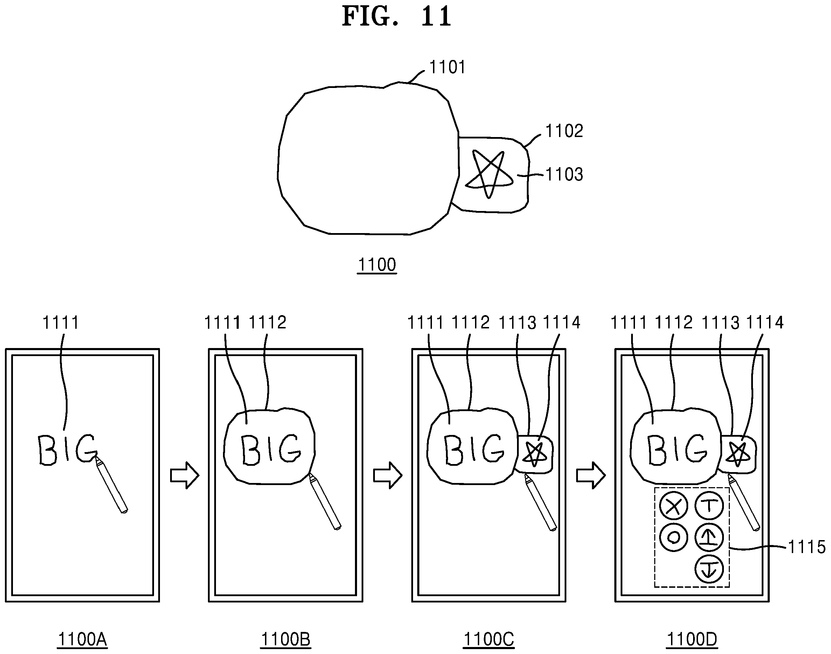

FIG. 11 is a diagram illustrating an example function of an all-tag display tag, according to an embodiment of the disclosure.

The all-tag display tag serves to output a user interface that shows forms of tags provided by the electronic device 100.

Referring to FIG. 11, the format for recognizing the all-tag display tag includes writing area designation input 1101, tag area designation input 1102, and tag input 1103. The electronic device 100 may identify the all-tag display tag by recognizing that the tag input 1103 included in the tag area designation input 1102 has the form of a star.

As shown in 1100A of FIG. 11, first, the user writes e.g., characters 'BIG' 1111 on the electronic device 100.

Subsequently, as shown in 1100B of FIG. 11, the user draws a first closed figure 1112 that encloses the characters 'BIG' 1112.

Referring to 1100C of FIG. 11, the user draws a second closed figure 1113 next to the first closed figure 1112 and draws star-shaped tag input 1114 in the second closed figure 113.

The electronic device 100 recognizes the first closed figure 1112, the second closed figure 1113, and the tag input 1114 after receiving all the writing input from the user. In this case, when it is determined that the tag input 1114 corresponds to the all-tag display tag, which is a predefined tag input stored in the electronic device 100, a function corresponding to the tag input is determined.

Referring to 1100D of FIG. 11, the electronic device 100 may output a user interface 1115 that displays all forms of tags provided by the electronic device 100, according to the function of the all-tag display tag. Accordingly, even though the user may not know what functions of tags the electronic device 100 provides, the user may use the all-tag display tag to have the user interface 1115 that shows all the forms of tags provided by the electronic device 100.

In an embodiment of the disclosure, when the user selects a tag form from the user interface 1115, the electronic device 100 may perform a function of the tag selected by the user for the characters 'BIG' 1112, which is the written content enclosed by the first closed figure 1112. As such, as a function corresponding to a tag automatically selected when the corresponding tag form included in the user interface 1115 is selected is automatically performed, the user may be spared from the trouble of repeatedly making tag inputs.

In an embodiment of the disclosure, when the user selects a tag form from the user interface 1115, the electronic device 100 may output another user interface that shows a description of the function of the tag selected by the user. For example, as shown in 1100D, the user may still not know what function each tag has even while the user interface 1115 is displayed to show all the forms of tags, so another user interface (not shown) may be shown to provide help about each tag.

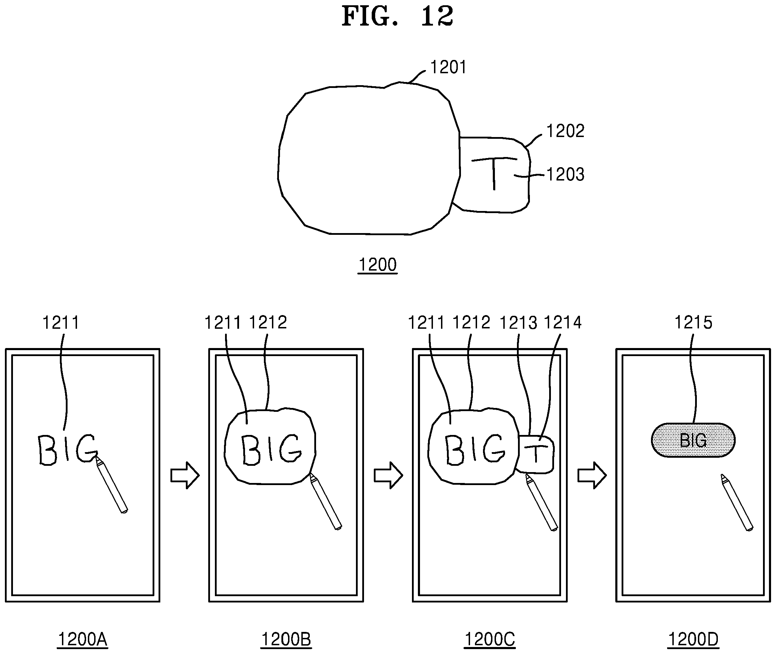

FIG. 12 is a diagram illustrating an example function of a text tag, according to an embodiment of the disclosure.

The text tag has a function for the electronic device 100 to convert the written content into digital text.

Referring to 1200 of FIG. 12, the format for recognizing the text tag includes writing area designation input 1201, tag area designation input 1202, and tag input 1203. The electronic device 100 may identify the text tag by recognizing that the tag input 1203 included in the tag area designation input 1202 has the form of 'T'.

As shown in 1200A of FIG. 12, first, the user writes e.g., characters 'BIG' 1211 on the electronic device 100.

Subsequently, as shown in 1200B of FIG. 12, the user draws a first closed figure 1212 that encloses the characters 'BIG' 1211.

Referring to 1200C of FIG. 12, the user draws a second closed figure 1213 next to the first closed figure 1212 and draws T-shaped tag input 1214 in the second closed figure 1213.

The electronic device 100 recognizes the first closed figure 1212, the second closed figure 1213, and the tag input 1214 after receiving all the writing input from the user. In this case, when the electronic device determines that the tag input 1214 corresponds to the text tag, which is a predefined tag input stored in the electronic device 100, a function corresponding to the tag input is determined.

Referring to 1200D of FIG. 12, the electronic device 100 converts the characters 'BIG' 1211, the written content enclosed by the first closed figure 1212, into digital text and outputs the digital text, according to the function of the text tag. To output and display the digital text 1215, the electronic device 100 may represent the digital text in orange used in the writing input.

In an embodiment of the disclosure, the electronic device 100 may store the digital text converted from the written content in the corresponding roll.

Furthermore, in an embodiment of the disclosure, the electronic device 100 may store information about the executed text tag in the roll as the metadata of the roll.

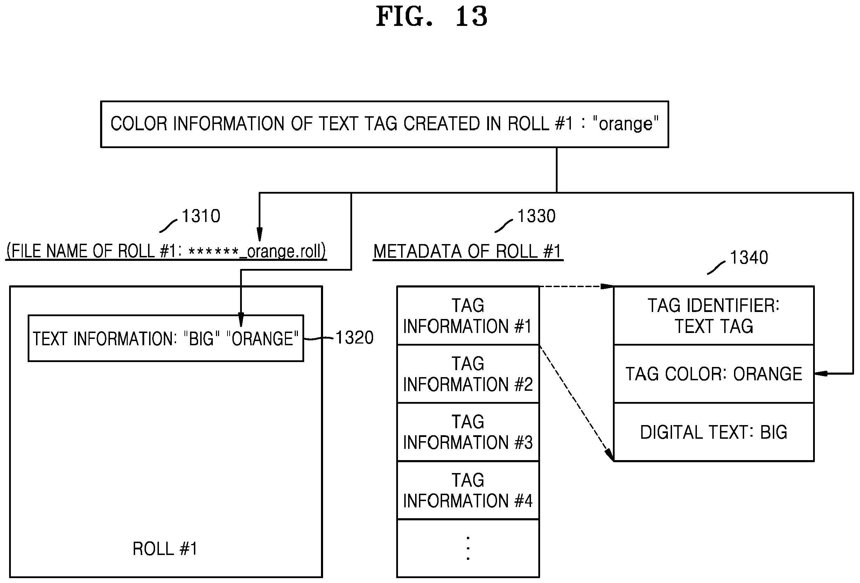

FIG. 13 is a diagram illustrating an example of using color information in a text tag, according to an embodiment of the disclosure.

It may be assumed, for convenience, that the text tag as described above in connection with FIG. 12 is created in e.g., roll #1 and the color information of the text tag is 'orange'.

Referring to FIG. 13, in an embodiment of the disclosure, for text information of roll #1 1320, 'BIG' and 'orange' that is color information used in the text tag may be stored. As roll #1 includes the text information 'BIG' and 'orange', the electronic device 100 may search for roll #1 later on based on the text 'BIG' and 'orange'.

In an embodiment of the disclosure, a file name of roll #1 1310 may be created to include 'orange'. As the file name of roll #1 1310 includes 'orange', the electronic device 100 may search for a roll that includes a tag whose writing input is in orange.

In an embodiment of the disclosure, a plurality of pieces of tag information are stored as metadata of roll #1 1330, in which case tag information 1340 of the text tag may include 'text tag' for the tag identifier, 'orange' for the tag color, and 'BIG' for the digital text. As such, roll #1 includes 'BIG' and 'orange' as information of the text tag, so the electronic device 100 may search for the tag based on 'BIG' and 'orange'.

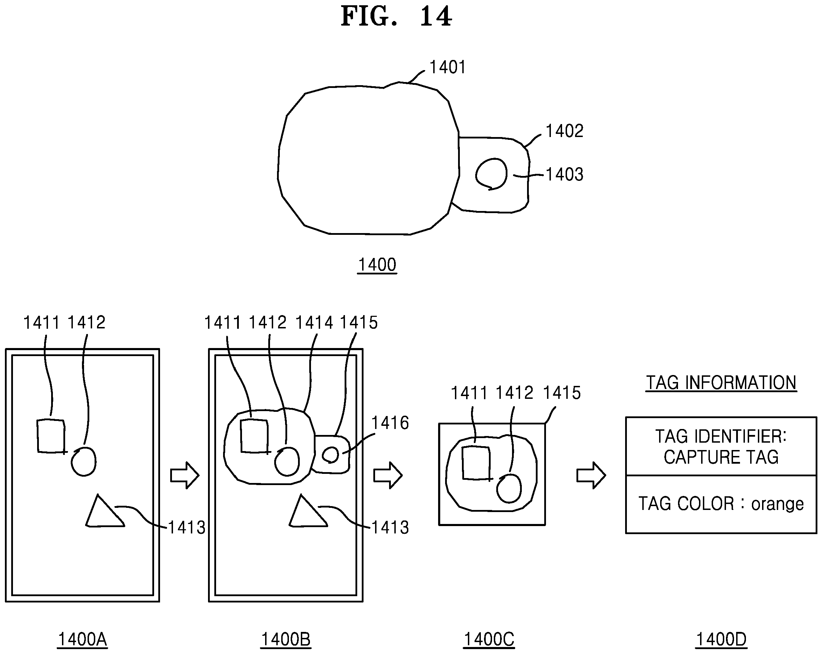

FIG. 14 is a diagram illustrating an example function of a capture tag, according to an embodiment of the disclosure.

The capture tag has a function for the electronic device 100 to capture the written content and store it in an image form in a local storage space of the electronic device 100.

Referring to 1400 of FIG. 14, the format for recognizing the capture tag includes writing area designation input 1401, tag area designation input 1402, and tag input 1403. The electronic device 100 may identify the capture tag by recognizing that the tag input 1403 included in the tag area designation input 1402 has the form of 'O'.

Referring to 1400A of FIG. 14, the user may first draw e.g., a square 1411, a circle 1412, and a triangle 1413 on the electronic device 100.

Referring to 1400B of FIG. 14, the user draws a first closed figure 1414 that encloses the square and the circle, then draws a second closed figure 1415 next to the first closed figure 1414, and draws O-shaped tag input 1416 in the second closed figure 1415.

The electronic device 100 recognizes the first closed figure 1414, the second closed figure 1415, and the tag input 1416 after receiving all the writing input from the user. In this case, when the electronic device 100 determines that the tag input 1416 corresponds to the capture tag, which is a predefined tag input stored in the electronic device 100, a function corresponding to the tag input is determined.

Referring to 1400C of FIG. 14, the electronic device 100 cuts some written content including the square 1411 and the circle 1412 enclosed by the first closed figure 1414 along the first closed figure 1414 and stores the cutting result in a storage space of the electronic device 100 in an image form, according to the function of the capture tag.

In an embodiment of the disclosure, the electronic device 100 may store information about the capture tag as metadata of the corresponding roll. Referring to 1400D of FIG. 14, the information about the capture tag may include capture tag' for the tag identifier and 'orange' for the tag color.

In an embodiment of the disclosure, when the captured content is stored in the storage space in the image form, an image file including the image may include e.g., tag color information. Accordingly, the electronic device 100 may search for the image file stored according to the capture tag based on the tag color information later on.

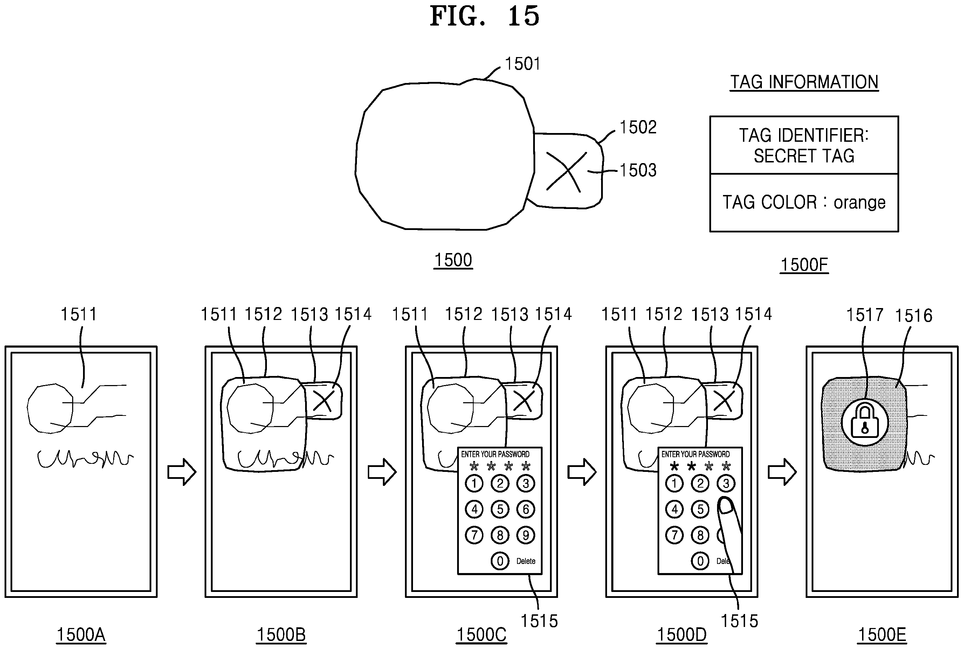

FIG. 15 is a diagram illustrating an example function of a secret tag, according to an embodiment of the disclosure.

The secret tag has a function for the electronic device 100 to conceal the written content with a cover in the color of a pen, so that the content is not viewed on the display.

Referring to 1500 of FIG. 15, the format for recognizing the secret tag includes writing area designation input 1501, tag area designation input 1502, and tag input 1503. The electronic device 100 may identify the secret tag by recognizing that the tag input 1503 included in the tag area designation input 1502 has the form of 'X'.

Referring to 1500A of FIG. 15, the user may first make writing input 1511 including e.g., a polygon or characters, on the electronic device 100.

Subsequently, as shown in 1500B of FIG. 15, the user draws a first closed figure 1512 that encloses part of the writing input 1511, then draws a second closed figure 1513 next to the first closed figure 1512, and draws X-shaped tag input 1514 in the second closed figure 1513.

The electronic device 100 recognizes the first closed figure 1512, the second closed figure 1513, and the tag input 1514 after receiving all the writing input from the user. In this case, when the electronic device 100 determines that the tag input 1514 corresponds to the secret tag, which is a predefined tag input stored in the electronic device 100, a function corresponding to the tag input is determined.

As shown in 1500C of FIG. 15, the electronic device 100 outputs a user interface 1515 for receiving a PIN to release the secret tag, according to the function of the secret tag.

Referring to 1500D of FIG. 15, the electronic device 100 receives the user's PIN through the user interface 1515.

Referring to 1500E of FIG. 15, once the user's PIN is entered, the electronic device 100 may prevent the written content enclosed by the first closed figure 1512 from being viewed by concealing the written content with a cover 1516 in the same color as the color used for the tag. Furthermore, to indicate that the written content is concealed by the secret tag, the electronic device 100 may output a particularly shaped image, e.g., a lock image 1517, on the cover 1516.

As such, when the secret tag is executed, information about the secret tag may include 'secret tag' for the tag identifier and 'orange' for the tag color.

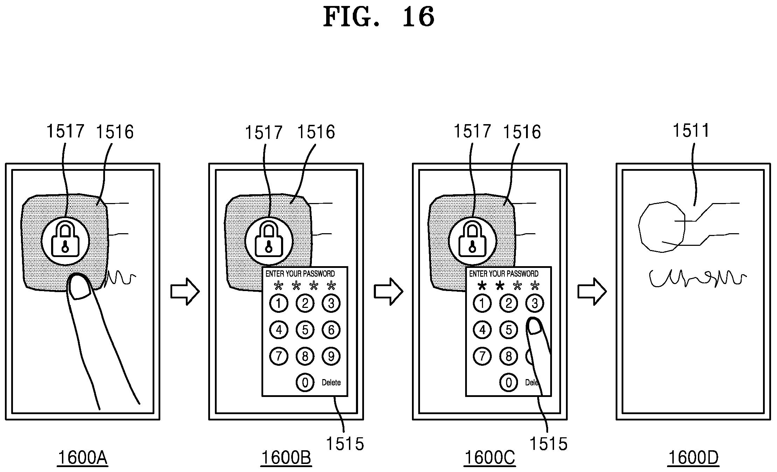

FIG. 16 is a diagram illustrating an example of how to release a secret tag, according to an embodiment of the disclosure.

Referring to 1600A of FIG. 16, release of the secret tag may be triggered when the user selects the image 1517 output on the cover 1516 to indicate that the secret tag is executed.

As shown in 1600B of FIG. 16, as the image 1517 is selected, the electronic device 100 may output the user interface 1515 to receive a PIN to release the secret tag.

Referring to 1600C of FIG. 16, when the user inputs the PIN to the user interface 1515, the electronic device 100 determines whether the PIN input from the user corresponds to the PIN that was previously used to execute the secret tag.

Referring to 1600D of FIG. 16, the electronic device 100 releases the secret tag by removing the cover 1516 when the currently input PIN corresponds to the previously input PIN. Accordingly, the original written content 1511 may be disclosed on the display of the electronic device 100.

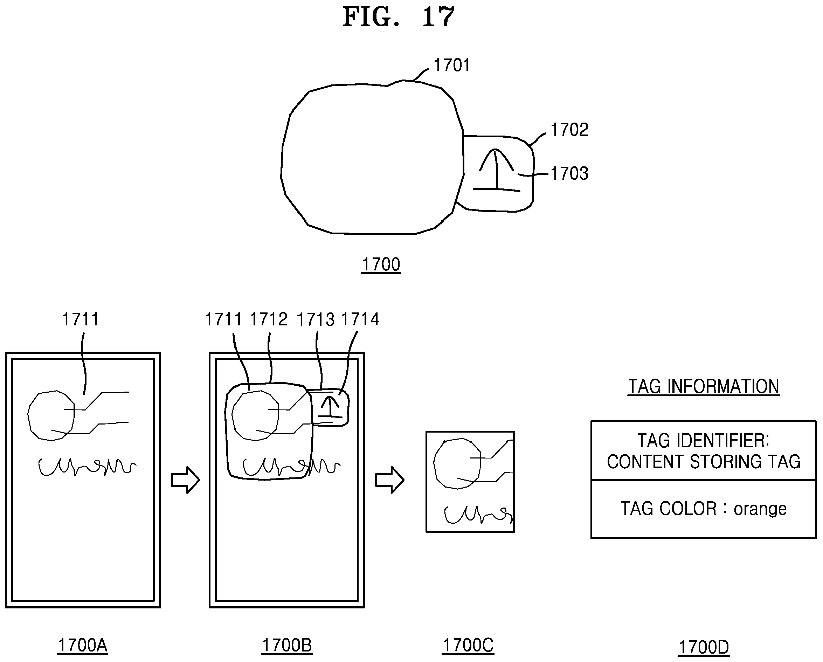

FIG. 17 is a diagram illustrating an example function of a content storing tag, according to an embodiment of the disclosure.

The content storing tag has a function for the electronic device 100 to store the written content in a virtual space of the electronic device 100.

Referring to 1700 of FIG. 17, the format for recognizing the content storing tag includes writing area designation input 1701, tag area designation input 1702, and tag input 1703. The electronic device 100 may identify the content storing tag by recognizing that the tag input 1703 included in the tag area designation input 1702 has the form of '↑'.

Referring to 1700A of FIG. 17, the user may first make writing input 1711 including e.g., a polygon or characters, on the electronic device 100.

Referring to 1700B of FIG. 17, the user draws a first closed figure 1712 that encloses part of the writing input 1711, then draws a second closed figure 1713 next to the first closed figure 1712, and draws ↑-shaped tag input 1714 in the second closed figure 1713.

The electronic device 100 recognizes the first closed figure 1712, the second closed figure 1713, and the tag input 1714 after receiving all the writing input from the user. In this case, when the electronic device 100 determines that the tag input 1714 corresponds to the content storing tag, which is a predefined tag input stored in the electronic device 100, a function corresponding to the tag input is determined.

Referring to 1700C of FIG. 17, the electronic device 100 may store the written content enclosed by the first closed figure 1712 in a virtual space, according to the function of the content storing tag. In this case, the electronic device 100 may store the written content in a virtual space of a color of a pen used for the tag. For example, when the color of the pen used in the tag is orange, the written content 1711 may be stored in an orange-colored virtual space. In another example, when the color of the pen used in the tag is blue, the written content 1711 may be stored in an blue-colored virtual space.

As such, when the content storing tag is executed, information about the content storing tag may include 'content storing tag' for the tag identifier and 'orange' for the tag color.

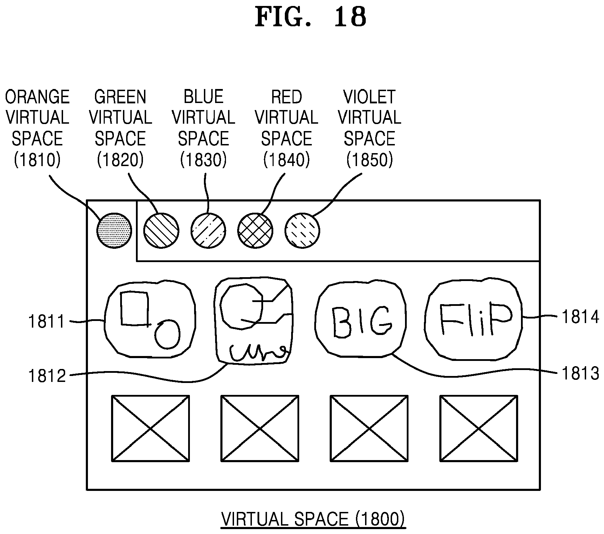

FIG. 18 is a diagram illustrating examples of the written content stored in virtual space based on a content storing tag, according to an embodiment of the disclosure;

Virtual space 1800 may include a plurality of virtual spaces classified by color. The written content subject to the content storing tag may be stored in the virtual space that automatically corresponds to a color used for the content storing tag.

For example, the user may open the content of the virtual space through a particular menu of the electronic device 100. An example of a virtual space user interface to be shown for the user is the virtual space 1800 shown in FIG. 18. For example, the virtual space 1800 may include an orange virtual space 1810, a green virtual space 1820, a blue virtual space 1830, a red virtual space 1840, and a violet virtual space 1850. When the user selects one of the colors of the virtual spaces, the electronic device 100 may show the written content stored in the virtual space of the color.

Referring to FIG. 18, for example, when the user selects the orange virtual space 1810, the electronic device 100 may show contents of writing 1811, 1812, 1813, and 1814 stored in the orange virtual space 1810. As such, as the written content to be stored according to the content storing tag is classified according to a color of the tag and stored in the corresponding virtual space, the user may conveniently search for the content stored in the virtual space based on the tag color.

For example, when the user stores all the written content related to a particular meeting topic by means of the content storing tag using blue color, the user may easily look up the written content by selecting the blue virtual space to open the written content related to the particular meeting topic.

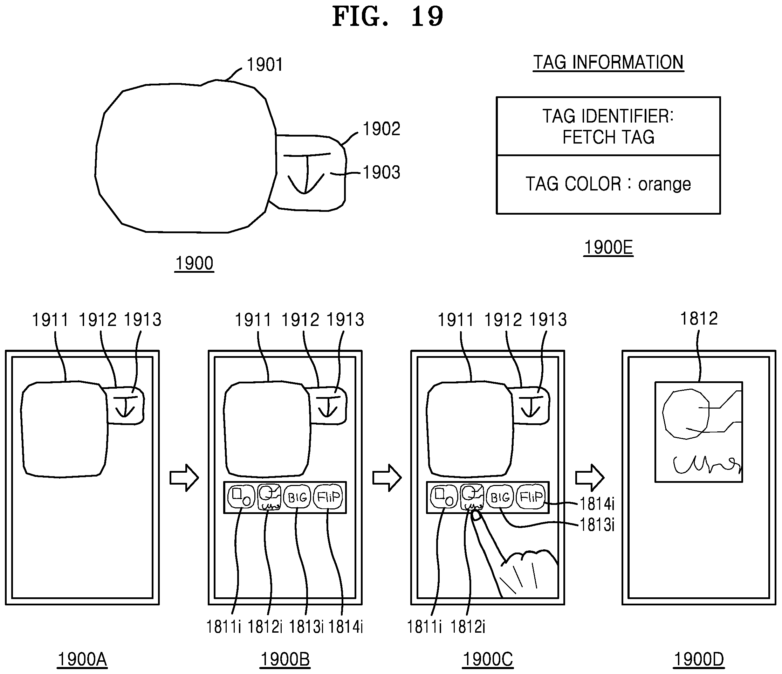

FIG. 19 is a diagram illustrating an example function of a fetch tag, according to an embodiment of the disclosure.

The fetch tag has a function for the electronic device 100 to fetch the written content stored by means of the content storing tag in the virtual space.

Referring to 1900 of FIG. 19, the format for recognizing the fetch tag includes writing area designation input 1901, tag area designation input 1902, and tag input 1903. The electronic device 100 may identify the fetch tag by recognizing that the tag input 1903 included in the tag area designation input 1902 has the form of '↑'.

As shown in 1900A of FIG. 19, to use the function of the fetch tag, the user draws a first closed figure 1911, then draws a second closed figure 1912 next to the first closed figure 1911, and draws ↓-shaped tag input 1913 in the second closed figure 1912 on the electronic device 100. As the virtual spaces storing contents by means of the content storing tag are classified by tag color, the user may draw tag format using a pen of a color matching the color of a virtual space from which the user wants to fetch the content. For example, when the user wants to fetch the written content stored in the orange virtual space, the user may draw the fetch tag format with an orange pen.

The electronic device 100 recognizes the first closed figure 1911, the second closed figure 1912, and the tag input 1913 after receiving all the writing input from the user. In this case, when the electronic device 100 determines that the tag input 1913 corresponds to the fetch tag, which is a predefined tag input stored in the electronic device 100, a function corresponding to the tag input is determined. For example, the electronic device 100 may check a color used for the fetch tag and determine that orange is used.

Referring to 1900B of FIG. 19, the electronic device 100 may output one or more contents of writing stored in the orange virtual space in respective thumbnail image forms, according to the function of the fetch tag. Turning back to FIG. 18, the contents of writing 1811, 1812, 1813, and 1814 are stored in the orange virtual space 1810. Accordingly, the electronic device 100 outputs thumbnail images 1811i, 1812i, 1813i, and 1814i of the contents of writing 1811, 1812, 1813, and 1814 included in the orange virtual space 1810.

Referring to 1900C of FIG. 19, when the user selects one of the thumbnail images of the contents of writing 1811, 1812, 1813, and 1814, the electronic device 100 may output a written content corresponding to the selected thumbnail image. For example, in FIG. 19, the user selects the thumbnail image 1812i of the written content 1812, and the electronic device 100 may output the written content 1812 selected by the user.

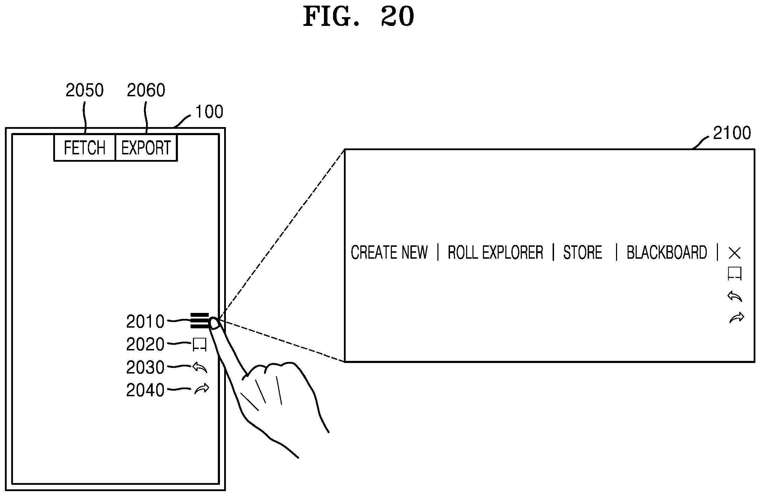

FIG. 20 is a diagram illustrating an example of menus provided in an electronic device, according to an embodiment of the disclosure.

Referring to FIG. 20, a roll manager menu 2010, a roll editor menu 2020, a back menu 2030, and a forward menu 2040 may be provided near the right edge of the screen of the electronic device 100. The roll manager menu 2010 is a menu to manage rolls and change the settings. The roll editor menu 2020 is a menu to move or edit a created roll in a unit of page. The back menu 2030 is a menu to cancel the latest task. The forward menu 2040 is a menu to restore the latest task.

When the user selected the roll manager menu 2010, a new user interface 2100 may be output. The new user interface 2100 may include menus like create new', roll explorer', 'store', 'blackboard', etc. The menu create new' is a menu to create a new roll. The menu 'roll explorer' is a menu to open, delete, or export a stored roll. The menu 'store' is a menu to store the current roll. The menu 'blackboard' is a menu to switch writing mode between blackboard and whiteboard.

A fetch menu 2050 and an export menu 2060 may be arranged near the top edge of the screen of the electronic device 100. The fetch menu 2050 may enable the electronic device 100 to show a screen of an external device connected to the electronic device 100 or fetch a material, such as an image stored in a connected USB or network drive. The export menu 2060 may enable the electronic device 100 to export a roll created in the electronic device 100 in various methods, such as by email, printer, USB, screen sharing with an external device.

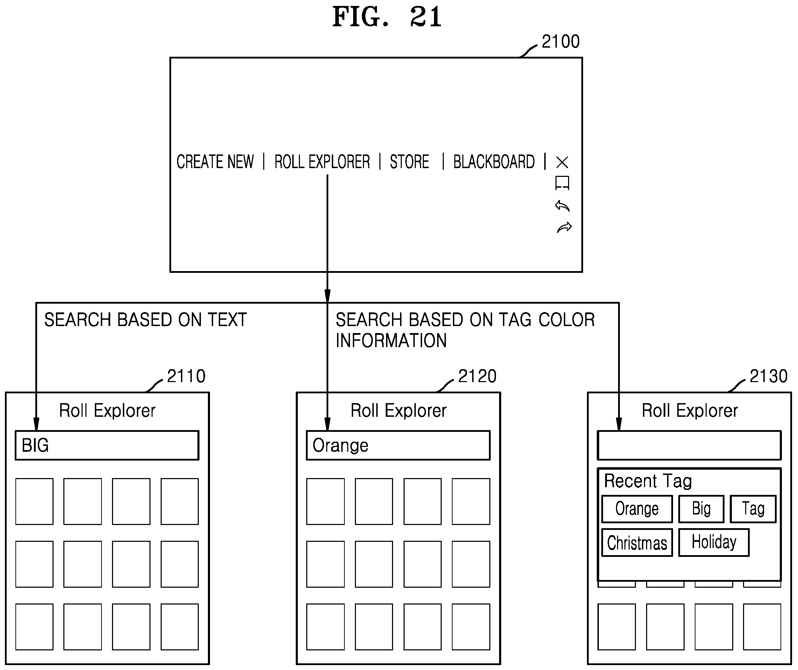

FIG. 21 is a diagram illustrating an example of using a roll explorer based on tag information, according to an embodiment of the disclosure.

Referring to FIG. 21, when the roll explorer menu is selected on the user interface 2100, the electronic device 100 may output a user interface to allow exploring of rolls stored in the electronic device 100.

Every time a roll is created in the electronic device 100, the roll and its metadata may be stored in storage space of the electronic device 100, as described above in connection with FIG. 10. The metadata of the roll may include various pieces of information about the roll. For example, the metadata of the roll may include information about one or more tags created in the roll. Accordingly, the electronic device 100 may use the roll explorer to search for a roll and tag information stored in the storage space.

In an embodiment of the disclosure, the electronic device 100 may use text used for the text tag in a roll explorer 2110 to search for a roll. For example, the user may input text 'BIG' on a search keyword input window in the roll explorer 2110. When receiving the text input, the electronic device 100 may discover one or more rolls that include the text 'BIG' inside the roll or as tag information. As described above in connection with FIG. 12, the text tag may not only convert the written content 'BIG' into text and store the text in the roll, but also add the text 'BIG' to information of the text tag. Hence, the electronic device 100 may search for a roll that includes the text 'BIG' in the roll or has a tag including 'BIG' as information of the text tag and output a user interface including the search results of one or more rolls. Accordingly, after the user takes an important note on the electronic device 100 during e.g., a meeting, and stores the note in text using the function of the text tag, the user may conveniently look for the note later using the roll explorer.

In an embodiment of the disclosure, the electronic device 100 may use color information used for the tag in a roll explorer 2120 to search for a roll. For example, the user may input text 'Orange' on a search keyword input window in the roll explorer 2120. When receiving the text input, the electronic device 100 may discover one or more rolls that include the text 'Orange' inside the roll or as tag information. As described above in connection with FIG. 12, the text tag may not only convert the written content 'BIG' into text and store the text in the roll, but also include the text 'BIG' and the color information of the tag 'Orange' for information of the text tag. Hence, the electronic device 100 may search for a roll that includes the text 'Orange' in the roll or has a tag including 'Orange' for text color information and output a user interface including the search results of one or more rolls.

The one or more rolls that come in search results may include both the rolls having text 'Orange' in the rolls and the rolls having 'Orange' for tag information in relation to the rolls. Hence, the electronic device 100 may output the rolls by distinguishing the rolls having the keyword 'Orange' for text from rolls having the keyword 'Orange' for a tag color.

Accordingly, when the user ever executed a tag function using an orange colored tag during e.g., a meeting, the user may discover all the rolls including the orange colored tag later by searching for 'Orange' in the roll explorer 2130.

In an embodiment of the disclosure, the electronic device 100 may recommend tags that have been used recently or have frequently been used in a roll explorer 2130. When one of the recommended tags is selected by the user, the electronic device 100 may search for the selected tag. For example, when the user selects 'Holiday' in the roll explorer 2130, the electronic device 100 may search for and output rolls those include the text 'Holiday' therein or as the tag information, among rolls stored in the electronic device 100.

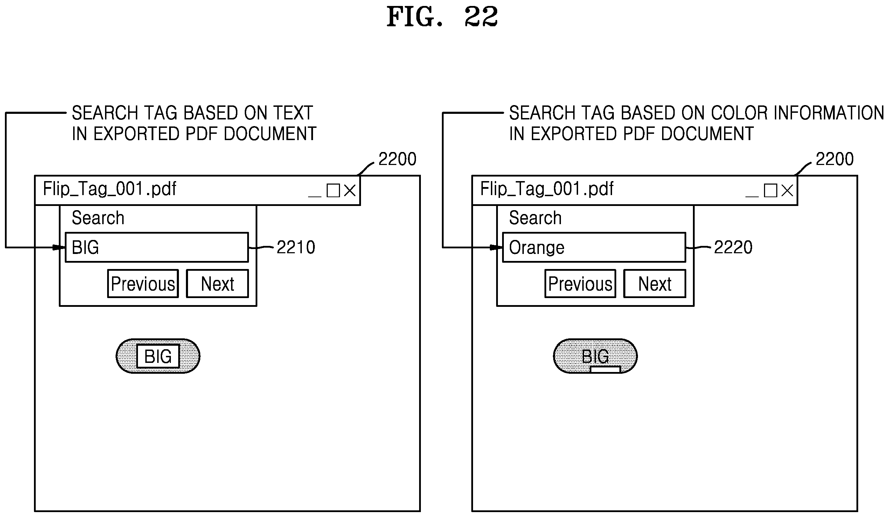

FIG. 22 is a diagram illustrating an example of tag search in an exported PDF document, according to an embodiment of the disclosure.

A roll created in the electronic device 100 may be exported into a PDF document. A roll that has text tag information as its metadata stores text in the roll, and the text tag information also includes the text. In this case, when the roll is exported to a PDF document, the text tag information, which is the metadata of the roll, may be stored in the PDF document. For example, when a roll including text 'BIG' and tag color information 'orange' as a result of executing the text tag as described above in connection with FIG. 12, is exported into a PDF document, the text 'BIG' and the color information 'orange' may be included in the PDF document as text. The text 'BIG' may be displayed in the PDF document while the color information 'Orange' is not shown, in which case the color information 'Orange' may be stored in the PDF document as color information related to the text 'BIG'.

Accordingly, referring to FIG. 22, when 'BIG' is input as a search keyword on an interface 2200 of the PDF document to which the roll is exported, the text 'BIG' may be searched for.

Furthermore, when 'Orange' is input as a search keyword on the interface 2200 of the PDF document to which the roll is exported, the text 'BIG' having color information 'orange' may be searched for.

The electronic device and operation method of the electronic device according to embodiments of the disclosure may be implemented in program commands which are executed by various computing devices and recorded in computer-readable media. The computer-readable media may include program commands, data files, data structures, etc., separately or in combination. The program commands recorded on the computer-readable media may be designed and configured specially for the disclosure, or may be well-known to those of ordinary skill in the art of computer software. Examples of the computer readable recording medium include hardware devices specially configured to store and execute program commands, such as read-only memories (ROMs), random-access memories (RAMs), Compact Disc (CD)-ROMs, magnetic tapes, floppy disks, optical data storage devices, etc. Examples of the program commands include not only machine language codes but also high-level language codes which are executable by various computing means using an interpreter, including, for example, codes generated by a compiler or codes executed by an interpreter.

According to embodiments of the disclosure, an electronic device may allow the user to perform a tag function for the written content input to the electronic device by the writing input without extra button or menu manipulation.

While various example embodiments of the disclosure have been illustrated and described, it will be understood that various modifications can be made without departing the scope of the disclosure. It will be apparent to those ordinary skilled in the art that the disclosure is not limited to the example embodiments of the disclosure described, but can encompass not only the appended claims but the equivalents.

## Claims

1. An electronic device comprising:
a display;
a touch input module comprising touch input circuitry configured to receive a touch input;
a memory configured to store one or more instructions; and
a processor configured to execute the one or more instructions stored in the memory to control the electronic device to:
receive a writing area designation input designating a writing area through the touch input module,
receive a tag input for the writing area through the touch input module, and
perform a predefined function corresponding to the tag input for the writing area.

2. The electronic device of claim 1, wherein the processor is further configured to execute the one or more instructions to control the electronic device to:
receive a tag area designation input designating the tag input through the touch input module, and
detect the tag input based on the tag area designation input.

3. The electronic device of claim 2, wherein the writing area designation input includes a first closed figure input, and
the tag area designation input includes a second closed figure input, different from the first closed figure input.

4. The electronic device of claim 1, wherein the processor is further configured to execute the one or more instructions to control the electronic device to:
obtain a table defining one or more tags and a function respectively corresponding to the one or more tags, and
obtain information about a function defined for a tag corresponding to the tag input based on the table.

5. The electronic device of claim 1, wherein the processor is further configured to execute the one or more instructions to control the electronic device to store metadata including an identifier of a tag corresponding to the received tag input and color information used in the tag input in a storage space as tag information.

6. The electronic device of claim 5, wherein the processor is further configured to execute the one or more instructions to control the electronic device to search for the tag information stored in the storage space based on at least one of the tag identifier or the tag color information.

7. The electronic device of claim 1, wherein the processor is further configured to execute the one or more instructions to control the electronic device to:
detect a text tag from the tag input,
recognize a written character from the writing area, and
convert the recognized character into digital text based on a defined function corresponding to the text tag.

8. The electronic device of claim 7, wherein the processor is configured to execute the one or more instructions to control the electronic device to create metadata including an identifier of the text tag, the digital text corresponding to the recognized character, and color information used in the tag input.

9. The electronic device of claim 1, wherein the processor is further configured to execute the one or more instructions to control the electronic device to:
detect a capture tag from the tag input, and
capture written content obtained from the writing area and store the captured written content as an image based on a defined function corresponding to the capture tag.

10. The electronic device of claim 1, wherein the processor is further configured to execute the one or more instructions to control the electronic device to:
detect a secret tag from the tag input, and
conceal written content obtained from the writing area with an image in a color used in the tag input based on a defined function corresponding to the secret tag.

11. The electronic device of claim 10, wherein the processor is further configured to execute the one or more instructions to control the electronic device to:
output a user interface for receiving personal identification information based on the detection of the secret tag,
conceal the written content and output an image indicating that the secret tag is applied based on a user input including the personal identification information being received,
output a user interface for receiving the personal identification information to release the secret tag based on a user input selecting the image being received, and
display the concealed written content based on a user input including the personal identification information being received.

12. The electronic device of claim 1, wherein the processor is further configured to execute the one or more instructions to control the electronic device to:
detect a content storing tag from the tag input, and
store written content obtained from the writing area in a virtual space classified according to a color used in the tag input based on a defined function corresponding to the content storing tag.

13. The electronic device of claim 12, wherein the processor is configured to execute the one or more instructions to control the electronic device to:
detect a fetch tag from the tag input, and
fetch and display the written content stored in the virtual space based on color information used in the tag input based on a defined function corresponding to the fetch tag.

14. An method of operating an electronic device, the method comprising:
receiving a writing area designation input designating a writing area through a touch input module of the electronic device;
receiving a tag input for the writing area through the touch input module; and
performing a predefined function corresponding to the tag input for the writing area.

15. A computer program product comprising a non-transitory computer-readable recording medium having a program stored therein to perform a method of an electronic device, the method comprising:
receiving a writing area designation input designating a writing area through a touch input module of the electronic device;
receiving a tag input for the writing area through the touch input module; and
performing a predefined function corresponding to the tag input for the writing area.
